# EUROPÄISCHE PATENTSCHRIFT

(11) **EP 1 180 070 B1**
(45) Veröffentlichungstag und Bekanntmachung des Hinweises auf die Patenterteilung: **05.02.2003**
(21) Anmeldenummer: 00914142.5
(22) Anmeldetag: 16.03.2000
(51) Int. Cl.: B29C 67/24, A47K 1/00, C08K 9/08, B29C 67/00

(54) **KUNSTSTOFFFORMKÖRPER**
PLASTIC MOLDED BODY
CORPS MOULE EN MATIERE PLASTIQUE

(30) Priorität: 05.05.1999 DE 19920719
(43) Veröffentlichungstag der Anmeldung: 20.02.2002
(73) Patentinhaber: Schock GmbH, 73641 Schorndorf (DE)
(72) Erfinder: OBERASCHER, Leonhard, A-5020 Salzburg (AT); HIEBER, Gunter, D-73614 Schorndorf (DE); JOUSSEN, Thomas, D-71384 Weinstadt (DE); KNOSPE, Daniel, D-73614 Schorndorf (DE); PÄHL, Matthias, D-73614 Schorndorf (DE)
(74) Vertreter: Patentanwälte Bartels und Partner
(86) Internationale Anmeldenummer: EP0002333
(87) Internationale Veröffentlichungsnummer: WO00067992

(56) Entgegenhaltungen:
- EP-A- 0 786 479
- WO-A-97/16479
- WO-A-98/13401
- US-A- 3 963 512
- US-A- 5 800 910
- DATABASE WPI Section Ch, Week 199040 Derwent Publications Ltd., London, GB; Class A32, AN 1990-301318 XP002140564 & JP 02 212531 A (DOWA MINING CO LTD), 23. August 1990 (1990-08-23)

## Beschreibung

Die Erfindung betrifft einen Kunststofformkörper, umfassend eine aus einer aushärtbaren Reaktionsmasse gebildeten Polymerphase und ein darin eingelagertes partikelförmiges Füllstoffmaterial. Solche Kunststofformkörper werden seit langem als Küchenarbeitsplatten, Küchenspülen, Sanitärteile und dergleichen gefertigt oder als Werkstoffe zur Herstellung von solchen Teilen verwendet.

Diese Kunststofformkörper ersetzen in vielen Fällen natürliche Werkstoffe wie z. B. Marmor, Granit etc., die sich durch ihre besondere optische ästhetische Erscheinung auszeichnen.

Um diesem natürlichen Vorbild möglichst nahe zu kommen, wurde bereits eine Reihe von Vorschlägen gemacht, wobei hier beispielsweise auf die DE 38 32 351, die DE 40 40 602 A1 sowie die DE 196 39 039 C1 hingewiesen wird.

Als Füllmaterialien werden bei den vorgenannten Druckschriften entweder anorganische Füllstoffe in Form von Granitmehl oder -sanden, Quarzmehl oder -sanden oder anderen Mineralien von fein- bis grobkörniger Struktur vorgeschlagen oder aber auch partikelförmige Füllstoffe auf Polymerbasis, die selber wiederum anorganische Füllstoffe enthalten.

Obwohl bei den vorgenannten Verfahren Formkörper erhalten wurden, die sehr gut vom Markt aufgenommen wurden, bleibt doch der Wunsch nach einem den natürlichen Werkstoffen wie Marmor, Granit etc. noch ähnlicheren Material weiter bestehen.

Aufgabe der vorliegenden Erfindung ist es, einen Kunststofformkörper mit einer solchen größeren Ähnlichkeit zu natürlichen Werkstoffen vorzuschlagen.

Diese Aufgabe wird bei dem eingangs erwähnten Kunststofformkörper dadurch gelöst, daß das Füllmaterial ein mit einem anorganischen Füllstoff gefülltes Harzmaterial umfaßt, wobei die Polymerphase bis zu 60 Gew.%, bezogen auf den Kunststofformkörper, an anorganischen Zuschlagstoffpartikeln umfaßt, wobei das Füllmaterial eine Korngröße im Bereich von 60 bis 8 000 µm aufweist und in einem Anteil von ca. 5 bis ca. 75 Gew.% in dem Kunststofformkörper enthalten ist, und wobei das Füllmaterial mindestens 10 Vol.% Partikel umfaßt, welche zwei oder mehr verschiedenfarbige, oberflächlich sichtbare Polymerschichten aufweisen.

Durch die Verwendung des Füllmaterials, welches ein mit einem anorganischen Füllstoff gefülltes Harzmaterial umfaßt, wobei mindestens 10 Vol.% der Füllmaterialpartikel zwei oder mehr verschiedenfarbige, oberflächlich sichtbare Polymerschichten aufweisen, wird ein deutlicher Fortschritt in der Annäherung an die natürlichen Werkstoffe erreicht.

Gerade die zwei oder mehr verschiedenfarbigen, oberflächlich sichtbaren Polymerschichten kommen dem Naturvorbild näher, da sich auch bei Natursteinen Einschlüsse finden lassen, die nicht gleichmäßig durchgefärbt sind.

Bevorzugte Kunststofformkörper weisen ein Füllmaterial auf, bei dem von den zwei oder mehr verschiedenfarbigen, oberflächlich sichtbaren Polymerschichten mindestens eine transparent oder transluzent ist. Dies hat zur Folge, daß aufgrund der erhöhten Lichtdurchlässigkeit solcher Partikel bzw. Partikelschichten das von der Oberfläche einfallende Licht tiefer in den Kunststoffformkörper eindringen kann und so quasi eine Verstärkung der Farbwirkung der Oberfläche erzeugt. Ähnliche Einschlüsse und ähnliche optische Effekte zeigen auch natürliche Werkstoffe, so daß dieser bevorzugte Kunststofformkörper natürlichen Werkstoffen sehr nahe kommt. Es wird hier ein anspruchsvolles Farbspiel erzeugt, das zu einem hohen ästhetischen Wert dieser Materialien führt.

Eine weitere Annäherung an die natürlichen Füllstoffe erzielt man dann, wenn die Partikel des Füllmaterials eine gebrochene Kornform aufweisen. Auch die Einschlüsse in natürlichen Werkstoffen weisen sehr häufig gebrochene Kornformen auf, so daß hier eine weitere Annäherung an das natürliche Vorbild erzielt wird.

Das auf einem mit einem anorganischen Füllstoff gefüllten Harzmaterial basierende partikelförmige Füllmaterial wird vorzugsweise zunächst als mehrschichtiges Plattenmaterial gefertigt, das dann zu den Füllmaterialpartikeln zerkleinert, insbesondere gemahlen wird.

Die für die Bildung der Polymerphase verwendete aushärtbare Reaktionsmasse kann aus einer Vielzahl von bekannten Reaktionsmassesystemen ausgewählt werden, wobei bevorzugte aushärtbare Reaktionsmassen einen ersten Monomer/Präpolymer-Sirup umfassen.

Die Polymerphase selber kann ein Acrylatpolymer, ein Polyester oder ein Epoxydharz sein, wobei die Acrylpolymermatrix in puncto Preis/Leistungsverhältnis die bevorzugte Alternative darstellt.

Die verwendeten anorganischen Füllstoffe sowohl für das Füllmaterial als auch als zusätzliche Zuschlagstoffpartikel für die Polymerphase sind, wie an sich bekannt, Granit-, Quarz- oder andere Mineralsande oder -mehle, wobei sich insbesondere der Füllstoff Aluminiumtrihydroxid, Kreide, Talkum und Bariumsulfat, d. h. weiche Füllstoffe mit einer Mohs-Härte von drei bis fünf Härtegraden bevorzugt sind. Dies führt zu einer einfachen und mit einem geringen Werkzeugaufwand durchführbaren Bearbeitbarkeit der Kunststofformkörper.

Andere Füllstoffe als oben erwähnt sind zwar im Prinzip ebensogut möglich wie die vorgenannten weichen Füllstoffe, jedoch erfordern sie aufgrund ihrer Härte in der Regel diamantbesetzte Werkzeuge für die Bearbeitung der Formkörper, so daß diese deshalb nur unter hohem Kostenaufwand bearbeitbar sind.

Wird als aushärtbare Reaktionsmasse ein erster Monomer/Präpolymer-Sirup eingesetzt, so wird bevorzugt der Präpolymergehalt im ersten Sirup ca. 5 bis ca. 30 Gew.%, bezogen auf den Sirup, betragen.

Die Viskosität des ersten Sirups wird bevorzugt auf ca. 20 bis ca. 300 mPa eingestellt, so daß sich eine gute Verarbeitbarkeit der Mischung aus Sirup und Füllmaterial bei der Herstellung der Kunststofformkörper ergibt.

Das Präpolymer des ersten Sirups weist vorzugsweise ein mittleres Molekulargewicht von ca. 20 000 bis ca. 300 000 Da auf, ein Wert, der optimal die Moderation der Viskosität des Sirups gestattet. Gleichzeitig bieten solche Präpolymere bereits einen ausreichenden Effekt in der Schrumpfminderung beim Aushärten, wobei hier insbesondere an die Acrylatpolymere gedacht ist.

Der erste Sirup umfaßt vorzugsweise weiterhin ein radikalisch polymerisierbares Monomer, wie vorher ausgeführt, insbesondere vom Acrylattyp, wobei hierunter insbesondere Acrylat- und Methacrylatmonomere verstanden werden. Das zugehörige Präpolymer wird vorzugsweise als Homo- oder Copolymer der vorgenannten Monomereh eingesetzt.

Bei einer besonders bevorzugten Ausführungsform der Erfindung wird das partikelförmige Material in der aushärtbaren Reaktionsmasse quellbar gewählt und das gefüllte Harzmaterial (zumindest in seinen füllstoffpartikelhaltigen und nicht transparenten oder transluzenten Schichten) einen Füllstoffbereich von 50 bis 80 Gew.% mit einer Korngröße von ca. 5 bis ca. 100 µm umfassen.

Läßt man das partikelförmige Füllmaterial in der aushärtbaren Reaktionsmasse quellen, erhält man eine nicht mehr fließfähige, in Formen preßbare Masse, in der durch das Pressen in der Form das Füllmaterial mit seinem Anteil an mehrschichtigen Füllstoffpartikeln an die Sichtseitenoberfläche gedrückt wird. Dadurch wird sichergestellt, daß ein ausreichender Anteil an Mehrschichtfüllmaterialpartikeln an der Oberfläche sichtbar ist und so ausreichend dem Effekt der Nachbildung natürlicher Werkstoffe dienen kann.

Verwendet man geringere Anteile, beispielsweise 5 bis 20 Gew.%, partikelförmige Füllmaterialien in Verbindung mit beispielsweise ca. 40 bis ca. 60 Gew.% anorganischen Zuschlagstoffen, erhält man eine fließ- und pumpfähige Dispersion der Füllmaterialien und Zuschlagstoffe in der Reaktionsmasse, die in eine Form gegossen werden kann, wobei es dann hier vorkommen kann, daß, je nach Rezeptur, nicht genügend viele der mehrschichtigen Füllmaterialpartikel an der Oberfläche sichtbar sind. Hier empfiehlt sich dann eine spanende oder mindestens abrasive Bearbeitung der Oberfläche, um ausreichend viele der Mehrschichtfüllmaterialpartikel an der Sichtseitenoberfläche des Kunststofformkörpers sichtbar werden zu lassen.

Das Harzmaterial des Füllmaterials wird vorzugsweise aus einem zweiten Monomer/Präpolymer-Sirup hergestellt, welcher einen Anteil von ca. 5 bis ca. 30 Gew.% Präpolymer mit einem mittleren Molekulargewicht im Bereich von ca. 20 000 bis ca. 300 000 Da enthält.

Der Füllstoff für dieses Harzmaterial des Füllmaterials ist vorzugsweise Aluminiumoxidtrihydrat, wobei allerdings die oben genannten Alternativen auf Granit-, Quarz- und anderer Basis ebenfalls geeignet sind, gegebenenfalls in Mischung mit Aluminiumoxidtrihydrat (ATH).

Das Aluminiumoxidtrihydrat wird vorzugsweise mit einem Silan in einer Menge von 0,04 bis 1 Gew.%, bezogen auf das Gewicht des Aluminiumoxidtrihydrats, beschichtet. Dies dient einer sicheren Ankopplung der Füllstoffpartikel an die umgebende Phase aus Harzmaterial. Ferner weisen bevorzugte zweite Monomer/Präpolymer-Sirupe einen Vernetzer mit einem Anteil von ca. 0,5 bis 5 Gew.%, bezogen auf das Gesamtgewicht des Sirups, auf. Diese Anteile an Vernetzer lassen eine ausreichende Festigkeit der Füllmaterialpartikel erwarten, wobei andererseits die Vernetzung noch nicht so weit getrieben wird, daß eine zu geringe Quellbarkeit erhalten wird.

Als Vernetzer im zweiten Monomer/Präpolymer-Sirup werden vor allem bi- oder polyfunktionelle Acrylatvernetzer verwendet.

Das partikelförmige Füllmaterial wird bevorzugt aus einer Mischung verschiedener granularer Füllmaterialien zusammengestellt. Dadurch lassen sich noch vielfältigere Effekte und insbesondere auch in Spezialfällen eine noch weitere Annäherung an die natürlichen Vorbilder erreichen.

Die Erfindung betrifft ferner ein Verfahren zur Herstellung von Kunststofformkörpern wie sie im vorhergehenden beschrieben wurden, wobei eine Mischung einer aushärtbaren Reaktionsmasse zur Bildung einer Polymerphase mit einem partikelförmigen Füllmaterial hergestellt und zum Aushärten in eine Form gegeben wird, wobei die aushärtbare Reaktionsmasse bis zu 60 Gew.% an anorganischen Füllstoffen umfaßt, wobei als Füllmaterial ein gegebenenfalls in der Reaktionsmasse quellbares Füllmaterial, welches ein mit einem anorganischen Füllstoff gefülltes Harzmaterial umfaßt, verwendet wird, wobei das Füllmaterial eine Korngröße von 60 bis ca. 8 000 µm aufweist, wobei ein Anteil des Füllmaterials von mindestens 10 Vol.% aus Partikeln gebildet ist, die zwei oder mehr verschiedenfarbige, oberflächlich sichtbare Polymerschichten aufweisen, und wobei das Füllmaterial so dosiert wird, daß es in dem Kunststofformkörper mit einem Anteil von ca. 5 bis ca. 75 Gew.% enthalten ist und wobei schließlich die Mischung zum Aushärten in eine Form gegeben und dort thermisch ausgehärtet wird.

Wie bereits zuvor erwähnt, kann bei dem Herstellungsverfahren zum Schluß eine spanabhebende oder auch alternativ oder kombiniert eine abrasive Bearbeitung erfolgen.

Diese und weitere Vorteile der Erfindung werden im folgenden anhand der Zeichnung und der Beispiele noch näher erläutert.

Es zeigen im einzelnen:
- Figur 1:: die Sichtseite eines erfindungsgemäßen Kunststoffformkörpers; und
- Figur 2:: die Sichtseite eines weiteren erfindungsgemäßen Kunststofformkörpers.

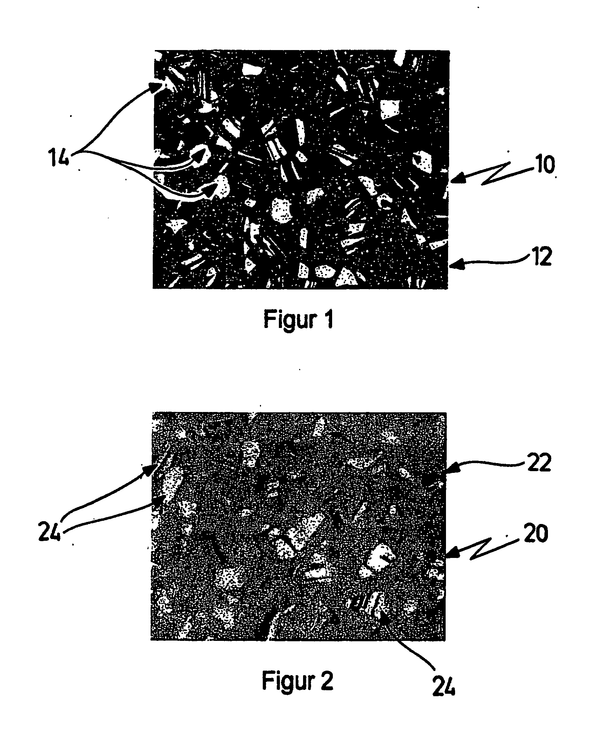

Der erfindungsgemäße Kunststofformkörper 10 der Figur 1 weist eine kontinuierliche, aus einer aushärtbaren Reaktionsmasse gebildete Polymerphase 12 auf, die darin eingelagert ein farblich kontrastierendes, partikelförmiges Füllmaterial 14 umfaßt. Die einzelnen Partikel des Füllmaterials 14 weisen eine gebrochene Kornform auf und darüber hinaus zwei oder mehr verschiedenfarbige, oberflächlich sichtbare Polymerschichten. Durch diese kontrastierenden Farbwirkungen wird hier eine sehr gute Annäherung an natürliche Materialien, d. h. Natursteine wie Granit, geschaffen.

Figur 2 zeigt eine Sichtseite eines erfindungsgemäßen Formkörpers 20, bei dem ebenfalls eine durchgehende Polymerphase 22 farblich kontrastierende Füllmaterialpartikel 24 enthält. Ebenso wie in Figur 1 ist mindestens ein Teil der farblich kontrastierenden Füllmaterialpartikel aus zwei oder mehreren verschiedenfarbigen, oberflächlich sichtbaren Polymerschichten aufgebaut, wobei hier ein Teil der Polymerschichten des Füllmaterialpartikels transparent ausgebildet ist. Dadurch erhält diese Material eine optische Tiefe und eine noch stärkere Wirkung in der Annäherung an natürliche Materialien.

Deshalb werden im Sinne der vorliegenden Erfindung bevorzugt solche Schichtgranulate als partikelförmiges Füllmaterial eingesetzt, bei denen eine eingefärbte, d. h. füllstoff- und pigmenthaltige Komponente oder Polymerschicht und eine transparente Polymerschicht miteinander abwechseln. Im folgenden soll nun anhand von Beispielen zunächst die Herstellung solcher Schichtgranulatpartikel beschrieben werden.

### Beispiel 1

Ganz generell werden hier zunächst zwei verschieden eingefärbte, füllstoffhaltige oder aber auch füllstofflose Gießharze aus den jeweils notwendigen Komponenten hergestellt, die aus dünnen Düsen unter einer oszillierenden Bewegung in eine Art Kuchenblech gegossen werden. Dabei wird darauf geachtet, daß möglichst viele Phasengrenzen zwischen diesen beiden Gießharzsträngen entstehen. Die Viskosität der beiden Gießharze wird so ausgelegt, daß eine Vermischung im wesentlichen vermieden wird. Geeignete Viskositäten liegen beispielsweise im Bereich von 6 000 bis 40 000 mPas, bevorzugt bei ca. 10 000 mPas. Nachdem das "Kuchenblech" gefüllt ist, wird die Masse in einer Presse ausgehärtet.

Nach dem Mahlen des ausgehärteten Materials entsteht ein Granulat, dessen Partikelgröße zwischen 60 und 8 000 µm gewählt wird. Das Granulat zeigt an seinen Oberflächen sichtbar eine Schichtung aus beispielsweise transparentem und eingefärbtem Material. Diese Partikel sind nun als Füllstoff im Sinne der vorliegenden Erfindung für die Herstellung von Kunststofformteilen, beispielsweise Platten oder anderen Formteilen, wie beispielsweise Küchenspülen, Sanitärteile oder dergleichen, geeignet. Statt nur eines Granulattyps können verschiedene Granulate mit unterschiedlich eingefärbten Schichtkomponenten eingesetzt werden. So entstehen Materialien, die einen außerordentlich hohen optischen Anspruch erfüllen.

Die besonderen Effekte des Schichtkorns in den erfindungsgemäßen Kunststofformkörpern lassen sich wie folgt beschreiben:

Insbesondere durch den transparenten Anteil eines Schichtgranulats läßt sich ein Farbspiel erreichen, bei dem ähnlich einem Lichtleiter der Farbeindruck der Hintergrundfarbe verstärkt wird. Je nachdem, wie weit der Schichtgranulatpartikel von der Oberfläche entfernt liegt, d. h. etwas unterhalb der Oberfläche, ganz unter die Oberfläche abtaucht oder sich direkt an der Oberfläche befindet, ergeben sich vielfältige optische Effekte. Je nachdem, wie stark die Schichtung im Partikel ausgebildet ist, ob die Schichtung senkrecht, schräg oder parallel zur Oberfläche orientiert ist, ergeben sich wiederum andere optische Effekte, was eine zusätzliche Bereicherung der Optik ergibt.

Durch diese beschriebenen Effekte wird eine völlig neuartige Optik bei den Kunststofformkörpern erzielt, die sich nicht nur an den natürlichen Vorbildern orientieren, sondern je nach Design auch ein völlig eigenständiges optisches Erscheinungsbild liefern können.

Vor allem bei großen Partikeln, d. h. Partikeln > 1 500 µm wird durch die Schichtstruktur nicht eine sonst beobachtete klassische, plakative Wirkung, sondern eine komplexe Optik erzielt.

Je nachdem, welche Farbe die zweite Komponente besitzt, ergeben sich in Verbindung mit der transparenten Komponente und der Hintergrundfarbe vielfältige optische Varianten.

In der folgenden Beschreibung sind alle Angaben in Gew.%, soweit nicht ausdrücklich anders angegeben.

### Gießharze zur Herstellung des Schichtkorns

### Komponente A

für eine transparente oder transluzente Polymerschicht wird mit einem mittleren prozentualen Anteil an der Gesamtmasse Schichtkorn von 20 bis 80 % verwendet, besonders bevorzugt ca. 40 %, wobei die Gesamtmasse eine Viskosität von 6 bis 40 Pa·s aufweist.

| Rezeptur der Komponente A | | | |
|---|---|---|---|
| Sirup | | | 80 - 97 % |
| | MMA | 60 - 85 % | |
| | PMMA 70 000 -200 000 Da | 15 - 40 % | |
| Füllstoffe | bevorzugt: Schichtsilikate, Kieselsäuren, ATH | | 0 - 20 % |
| Vernetzer/TRIM | | | 0,5 - 4 % |
| Peroxid 1 (BCHPC) | | | 0,2 - 1 % |
| Peroxid 2 (LP) | | | 0,4 - 2 % |
| Stearinsäure | | | 0 - 0,2 % |

Eine konkrete Beispielsrezeptur für die Komponente A setzt sich aus 93,4 % Sirup (70 % MMA, 30 % PMMA (100 000 Da)), 3 % pyrogene Kieselsäure (Aerosil R 812 S), 2 % TRIM als Vernetzer, 0,5 % BCHPC als erstes Peroxid, 1 % LP als zweites Peroxid und 0,1 % Stearinsäure als Formentrennmittel zusammen. Die Viskosität einer so zusammengesetzten Rezepturmasse beträgt ca. 10 Pa·s.

### Komponenten B1, B2, ... Bn

für in unterschiedlichen Farben (1, 2, ... n) eingefärbte Polymerschichten werden mit einem gesamten mittleren prozentualen Anteil der Komponenten an der Gesamtmasse des Schichtkorns von 20 bis 80 %, bevorzugt ca. 60 %, verwendet, wenn als weitere Schichtpolymerkomponente die Komponente A (transparent oder transluzent) verwendet wird. Es ergibt sich hierbei eine Viskosität der Gesamtmasse von 6 bis 40 Pa·s.

| Rezeptur der Komponenten B1, B2, ... Bn | | | |
|---|---|---|---|
| Sirup | | | 25 - 70 % |
| | MMA | 70 - 85 % | |
| | PMMA 70 000 -200 000 Da | 15 - 30 % | |
| Füllstoffe | bevorzugt ATH | | 20 - 75 % |
| Vernetzer/TRIM | | | 0,5 - 4 % |
| Peroxid 1 (BCHPC) | | | 0,2 - 1 % |
| Peroxid 2 (LP) | | | 0,4 - 2 % |
| Stearinsäure | | | 0,05 - 0,2 % |
| Pigmente | in den Farben 1, 2, ... oder n | | 0,01 - 4 Gew.teile pro 100 Gew.teile Gesamtrezeptur |

Eine konkrete Beispielsrezeptur für die Komponente B setzt sich aus 33,4 % Sirup (80 % MMA, 20 % PMMA (100 000 Da)), 63 % Füllstoff ATH (Korngröße: d50 = 35 µm), 2 % TRIM als Vernetzer, 0,5 % pyrogene Kieselsäure (Aerosil R 812 S), 0,5 % BCHPC als erstes Peroxid, 1 % LP als zweites Peroxid und 0,1 % Stearinsäure als Formentrennmittel zusammen. Die Viskosität einer so zusammengesetzten Rezepturmasse beträgt ca. 10 Pa·s. Pigmente werden nach freier Wahl, abhängig von dem gewünschten Farbeffekt, zusätzlich der Rezepturmasse beigefügt.

Durch Kombination von Komponenten A und B1, B2, ... und/oder Bn entstehen transparente/deckend eingefärbte Schichtgranulate. Durch Kombination von B1 und B2, ... Bn entstehen Schichtgranulate mit Hell-dunkel, Schwarz-weiß-, bzw. Buntton-Kontrasten.

### Verfahren zur Herstellung des Schichtgranulats

Die beiden Gießmassen werden über feine Mehrfachdüsen (ca. 1 bis 3 mm Ø) in eine Form gefüllt. Der Durchmesser der Düsen bestimmt die Zahl der Phasengrenzen bzw. die Dicke der Schichten im Schichtgranulat.

Die Masse wird in einer Presse unter Druck und Temperatur gehärtet:

| | |
|---|---|
| Schichtdicke | 5 - 15 mm, z.B. 8 mm |
| Härtungstemperatur | 80 - 130 °C, z.B. 100 °C |
| Härtungsdruck | 1 - 8 bar, z.B. 6 bar |
| Härtungsdauer | 15 - 40 min., z.B.. 25 min |

Nach dem Abkühlen werden die Platten gemahlen und in mehrere Schichtgranulatfraktionen gesiebt.

| | |
|---|---|
| fein | 80 µm - 600 µm |
| mittel | 600 µm - 1 200 µm |
| grob | 1 200 µm - 2 500 µm |
| sehr grob | > 2 500 µm |

Bei den so erhaltenen Schichtgranulaten liegt der Anteil der Partikel, der zwei oder mehr verschiedenfarbige, oberflächlich sichtbare Polymerschichten aufweist stets weit über der für die erfindungsgemäßen Effekte erforderlichen Untergrenze von 10 Volumen-%.

### Herstellung von Kunststofformkörpern mit Phantasie- bzw. Granitstrukturen unter Verwendung von Schichtyranulat

### a) Verwendung der klassischen Dispersions- oder Gießtechnologie

Dazu wird eine pump- und gießfähige aushärtbare Reaktionsmasse aus Acrylharz, Acrylatmonomer und ATH hergestellt (vgl. z. B. DE 40 40 602 A1) und dieser das partikelförmige Füllmaterial (Schichtgranulat) beigemischt. Die Viskosität der Gießmasse liegt bevorzugt im Bereich von 5 bis 80 Pa·s.

| Rezeptur für klassische Gießmassentechnologie | | | |
|---|---|---|---|
| Sirup | | | 25 - 50 % |
| | MMA | 70 - 90 % | |
| | PMMA 70 000 - 200 000 Da | 15 - 30 % | |
| Füllstoffe | bevorzugt ATH | | 20 - 75 % |
| Polymergranulat (beliebige Abmischung der Schichtgranulatfraktionen) | A, B1, B2, ... Bn beliebige Farbkombinationen möglich | | 5 - 30 % |
| Vernetzer / TRIM | | | 0,5 - 4 % |
| Peroxid 1 (BCHPC) | | | 0,2 - 1 % |
| Peroxid 2 (LP) | | | 0,4 - 2 % |
| Stearinsäure | | | 0.05 - 0,2 % |
| Feststoffgehalt des Werkstoffes (gesamter Formkörper) | | | 45 - 60 % |

Eine konkrete Beispielsrezeptur setzt sich aus 37 % Sirup (80 % MMA, 20 % PMMA (100 000 Da)), 39,4 % Füllstoff ATH (Korngröße: d50 = 35 µm), 20 % Schichtgranulat, 2 % TRIM als Vernetzer, 0,5 % BCHPC als erstes Peroxid, 1 % LP als zweites Peroxid und 0,1 % Stearinsäure als Formentrennmittel zusammen. Die Viskosität einer so zusammengesetzten Rezepturmasse beträgt ca. 30 Pa·s. Der Gesamtfeststoffgehalt im Kunststofformkörper liegt bevorzugt bei ca. 50 %.

| Härtungsbedingungen | |
|---|---|
| Härtungstemperatur | 80 - 130 °C, z.B. 100°C |
| Härtungsdruck | 1 - 8 bar, z.B. 6 bar |
| Härtungsdauer | 15 - 40 min., z.B. 30 min |

### b) Verwendung der BMC-Technologie

Dazu wird eine Gießmasse mit einem hohen Anteil an Polymergranulat hergestellt. Diese ist am Anfang noch flüssig, verändert aber ihre Konsistenz aufgrund eines Quellungsprozesses. Nach einer Stunde entsteht eine nicht mehr gießfähige Masse (Viskosität 100 bis 1 000 Pa·s, die in die Form eingebracht und unter hohem Druck verpreßt wird.

| Rezeptur für BMC-Technologie | | | |
|---|---|---|---|
| Sirup | | | 25 - 50 % |
| | MMA | 70 - 90 % | |
| | PMMA 70 000 - 200 000 Da | 15 - 30 % | |
| Füllstoffe | bevorzugt ATH | | 0 - 10 % |
| Polymergranulat (beliebige Abmischung der Schichtgranulatfraktion) | A, B1, B2, ... Bn beliebige Farbkombinationen möglich | | 20 - 75 % |
| Vernetzer / TRIM | | | 0,5 - 4 % |
| Peroxid 1 (BCHPC) | | | 0,2 - 1 % |
| Peroxid 2 (LP) | | | 0,4 - 2 % |
| Stearinsäure | | | 0,05 - 0,2 % |
| Feststoffgehalt des Werkstoffes (gesamter Formkörper) | | | 35 - 55 % |

Eine konkrete Beispielrezeptur setzt sich aus 38 % Sirup (80 % MMA, 20 % PMMA (100 000 Da)), 6 % Füllstoff ATH (Korngröße: d50 = 35 µm), 52,4 % Schichtgranulat, 2 % TRIM als Vernetzer, 0,5 % BCHPC als erstes Peroxid, 1 % LP als zweites Peroxid und 0,1 % Stearinsäure als Formentrennmittel zusammen. Die Viskosität einer so zusammengesetzten Rezepturmasse beträgt ca. 500 Pa·s. Ein bevorzugter Feststoffgehalt des gesamten Formkörpers liegt bei ca. 45 %.

| Härtungsbedingungen | |
|---|---|
| Härtungstemperatur | 80 - 130 °C, z.B. 100 °C |
| Härtungsdruck | 1 - 8 bar, z.B. 6 bar |
| Härtungsdauer | 15 - 40 min.z.B. 30 min |

### Beispiel 2

### Herstellung des Schichtgranulates Weiß/Transparent

### Komponente A (transparent):

In 45.900 g eines Acrylsirups (Feststoffgehalt 30 % PMMA Homopolymer; MW 100 000 Da) werden 200 g BCHPC und 300 g LP gelöst und anschließend noch 1 900 g TRIM untergemischt. Anschließend werden 1 600 g Aerosil R 812 S zugegeben. Die Mischung wird 15 min. mit einem Dissolver gemischt und anschließend noch 15 min. unter Rühren evakuiert.

### Komponente B1 (weiß):

In 17.093 g eines Acrylsirups (Feststoffgehalt 15% PMMA Homopolymer) werden 77 g BCHPC und 117,6 g LP und 49,0 g Stearinsäure gelöst. Anschließend werden noch 49 000 g Aluminiumhydroxid (d50 = 35 µm) dispergiert und 78,4 g Aerosil R 812 S als Antiabsetzagens eingemischt. Die Einfärbung der Mischung erfolgt mit 2 800 g einer vordispergierten Paste (Acrylsirup: TiO₂ = 1:1) von Titandioxid (RF K 2 von Bayer). Anschließend wird 10 min. gerührt und weitere 10 min. unter Rühren evakuiert.

### Beispiel 3

### Herstellung des Schichtgranulats Schwarz/Weiß

### Komponente B1 (weiß):

In 17.093 g eines Acrylsirups (Feststoffgehalt 15 % PMMA Homopolymer) werden 77 g BCHPC und 117,6 g LP und 49,0 g Stearinsäure gelöst. Anschließend werden noch 49 000 g Aluminiumhydroxid (d50 = 35 µm) dispergiert und 78,4 g Aerosil R 812 S als Antiabsetzagens eingemischt. Die Einfärbung der Mischung erfolgt mit 1.600 g einer vordispergierten Paste (Acrylsirup: TiO₂ = 1:1) von Titandioxid (RF K 2 von Bayer). Anschließend wird 10 min. gerührt und weitere 10 min. unter Rühren evakuiert.

### Komponente B2 (schwarz):

In 17.093 g eines Acrylsirups (Feststoffgehalt 15 % PMMA Homopolymer) werden 77 g BCHPC und 117,6 g LP und 49,0 g Stearinsäure gelöst. Anschließend werden noch 49 000 g Aluminiumhydroxid (d50 = 35 µm) dispergiert und 78,4 g Aerosil R 812 S als Antiabsetzagens eingemischt. Die Einfärbung der Mischung erfolgt mit 1 400 g einer vordispergierten Paste (Acrylsirup: Eisenoxid schwarz = 1:1; Eisenoxidschwarz M 318 von Bayer). Anschließend wird 10 min. gerührt und weitere 10 min. unter Rühren evakuiert.

### Beispiel 4

### Herstellung des Schichtgranulats Orange/Grün

### Komponente B3 (orange):

In 17 093 g eines Acrylsirups (Feststoffgehalt 15 % PMMA Homopolymer) werden 77 g BCHPC und 117,6 g LP und 49,0 g Stearinsäure gelöst. Anschließend werden noch 45 000 g Aluminiumhydroxid (d50 = 35 µm) dispergiert und 78,4 g Aerosil R 812 S als Antiabsetzagens eingemischt. Die Einfärbung der Mischung erfolgt mit 500 g einer vordispergierten Paste (Acrylsirup: Orange = 1:6) von Chromophthal (Orange GP, Firma Ciba-Geigy). Anschließend wird 10 min. gerührt und weitere 10 min. unter Rühren evakuiert.

### Komponente B4 (grün):

In 17 093 g eines Acrylsirups (Feststoffgehalt 15 % PMMA Homopolymer) werden 77 g BCHPC und 117,6 g LP und 49,0 g Stearinsäure gelöst. Anschließend werden noch 43 000 g Aluminiumhydroxid (d50 = 35 µm) dispergiert und 78,4 g Aerosil R 812 S als Antiabsetzagens eingemischt. Die Einfärbung der Mischung erfolgt mit 800 g einer vordispergierten Paste (Acrylsirup: Grün = 1:3) von Chromophthal (Grün GFNP, Firma Ciba-Geigy). Anschließend wird 10 min. gerührt und weitere 10 min. unter Rühren evakuiert.

### Beispiel 5

| Verarbeitung des Schichtgranulats mit der BMC-Technologie | | |
|---|---|---|
| Natural-Vormischung: | 18 426 g | Acrylsirup (21 %, PMMA Homopolymer) |
| | 6142 g | MMA |
| | 716,8 g | TRIM |
| | 71,7 g | Stearinsäure |
| | 89,6 g | BCHPC |
| | 153,6 g | LP |

In 30 340 g Natural-Vormischung werden 59 g einer Weißpaste (Acrylsirup: TiO₂ = 1:1) und 5 700 g Aluminiumhydroxid (silanisiert) gegeben. Als Füllmaterialpartikel kommen zur Granitnachbildung hinzu:

| | | |
|---|---|---|
| Polymergranulat Weiß | 0,08 - 0,6 mm | 14 870 g |
| Polymergranulat Weiß | 0,6 - 1,2 mm | 7 929 g |
| Polymergranulat Blau | 0,08 - 0,6 mm | 152 g |
| Schichtgranulat (Beispiel 2) | 0,08 - 0,6 mm | 2 764 g |
| Schichtgranulat (Beispiel 2) | 0,6 - 1,2 mm | 7 274 g |
| Schichtgranulat (Beispiel 2) | 1,2 - 2,5 mm | 6 909 g |

Das im vorliegenden Beispiel und auch den folgenden eingesetzte Polymergranulat Weiß bzw. Blau wird analog den Rezepturen der einzelnen Farbkomponenten B1, B2, ... mit entsprechender Farbeinstellung, wie in den Tabellen angegeben, gefertigt, gemahlen und in Fraktionen gesiebt.

Die Masse wird 10 min. lang gemischt und 10 min. lang entgast. Anschließend wartet man, bis die Masse gequollen ist und ohne weitere Sedimentationsproblematik in einer Presse verpreßt und gehärtet werden kann. Die hierbei erhaltene Oberfläche ist ähnlich der in Figur 2 gezeigten. Dort wurde zur besseren bildmäßigen Darstellung die Reaktionsmasse (Polymerphase 22) mit einem geringen Anteil (0,05 %) eines Schwarzpigments (Eisenoxid schwarz M 318, Firma Bayer) eingefärbt. Ersetzt man das Schichtgranulat durch das von Beispiel 3 und erhöht den Schwarzpigmentanteil auf ca. 0,4 %, erhält man eine Oberfläche wie in Figur 1 gezeigt.

### Vergleichsbeispiel 1 ohne Schichtgranulat / ohne transparente Anteile

In 30 340 g Natural-Vormischung werden 59 g einer Weißpaste (Acrylsirup: TiO₂ = 1:1) und 5.700 g Aluminiumhydroxid (silanisiert) gegeben. Als Granitpartikel kommen hinzu:

| | | |
|---|---|---|
| Polymergranulat Weiß | 0,08 - 0,6 mm | 17 634 g |
| Polymergranulat Weiß | 0,6 - 1,2 mm | 15 203 g |
| Polymergranulat Blau | 0,08 - 0,6 mm | 152 g |
| Polymergranulat Weiß | 1,2 - 2,5 mm | 6 909 g |

Die Masse wird 10 min. lang gemischt und 10 min. lang entgast. Anschließend wartet man, bis die Masse gequollen ist und ohne weitere Sedimentationsproblematik in einer Presse verpreßt und gehärtet werden kann.

Der Werkstoff mit dem Schichtgranulat aus Beispiel 5 zeichnet sich gegenüber dem Ergebnis des Vergleichsbeispiels 1 aus durch ein deutlich verbessertes optisches Erscheinungsbild. Um die optischen Eigenschaften noch deutlicher hervorzuheben, d. h. um die Schichtgranulatkörner besser "freizulegen", können ca. 100 bis 500 µm Material abgeschliffen werden.

### Beispiel 6

| Verarbeitung des Schichtgranulats mit der klassischen Dispersionstechnologie | | |
|---|---|---|
| Natural-Vormischung: | 18 426 g | Acrylsirup (21 %, PMMA Homopolymer) |
| | 6 142 g | MMA |
| | 716,8 g | TRIM |
| | 71,7 g | Stearinsäure |
| | 89,6 g | BCHPC |
| | 153,6 g | LP |
| | 18 402 g | Aluminiumhydroxid (ATH) (Korngröße: d50 = 35 µm) |

### In 25 000 g Natural-Vormischung werden vorgelegt:

Als Füllmaterial zur Granitnachbildung kommen hinzu:

| | | |
|---|---|---|
| Polymergranulat Weiß | 0,08 - 0,6 mm | 2 870 g |
| Polymergranulat Weiß | 0,6 - 1,2 mm | 500 g |
| Polymergranulat Blau | 0,08 - 0,6 mm | 106 g |
| Schichtgranulat (Beispiel 2) | 0,08 - 0,6 mm | 764 g |
| Schichtgranulat (Beispiel 2) | 0,6 -1,2 mm | 2 274 g |
| Schichtgranulat (Beispiel 2) | 1,2 - 2,5 mm | 1 909 g |
| | | |
| Insgesamt | | 8 423 g |

Die Masse wird 10 min. lang gemischt und 10 min. lang entgast. Anschließend wartet man, bis die Masse gequollen ist. Dann wird die Masse in Gießformen gepumpt und unter Druck und Temperatur gehärtet. Die hierbei erhältliche Oberfläche ist wieder ähnlich der in Beispiel 5 erhaltenen.

### Vergleichsbeispiel 2

In 25 000 g Natural-Vormischung werden vorgelegt: Als Füllmaterial zur Granitnachbildung kommen hinzu:

| | | |
|---|---|---|
| Polymergranulat Weiß | 0,08 - 0,6 mm | 3 634 g |
| Polymergranulat Blau | 0,08 - 0,6 mm | 106 g |
| Polymergranulat Weiß | 0,6 - 1,2 mm | 2 774 g |
| Polymergranulat Weiß | 1,2 - 2,5 mm | 1 909 g |
| | | |
| Insgesamt | | 8423 g |

Die Masse wird 10 min. lang gemischt und 10 min. lang entgast. Anschließend wartet man, bis die Masse gequollen ist. Dann wird die Masse in Gießformen gepumpt und unter Druck und Temperatur gehärtet.

Der Werkstoff mit dem Schichtgranulat gemäß Beispiel 6 zeichnet sich aus durch ein deutlich verbessertes optisches Erscheinungsbild gegenüber dem Ergebnis von Vergleichsbeispiel 2. Wenn die optischen Eigenschaften noch deutlicher hervorgehoben werden sollen, d. h. um die Granulatkörner "freizulegen", können ca. 100 bis 500 µm Material abgeschliffen werden.

## Patentansprüche

1. Kunststofformkörper, umfassend eine aus einer aushärtbaren Reaktionsmasse gebildeten Polymerphase und ein darin eingelagertes partikelförmiges Füllmaterial,
wobei das Füllmaterial ein mit einem anorganischen Füllstoff gefülltes Harzmaterial umfaßt, wobei die Polymerphase bis zu 60 Gew.%, bezogen auf den Kunststofformkörper, an anorganischen Zuschlagstoffpartikeln umfaßt,
wobei das Füllmaterial eine Korngröße im Bereich von 60 bis 8000 µm aufweist und in einem Anteil von 5 bis 75 Gew.% in dem Kunststofformkörper enthalten ist, **gekennzeichnet dadurch, daß** das Füllmaterial zu mindestens 10 Volumen-% Partikel umfaßt, welche zwei oder mehr verschiedenfarbige, oberflächlich sichtbare Polymerschichten aufweist.

2. Kunststofformkörper nach Anspruch 1, **dadurch gekennzeichnet, daß** mindestens eine der Polymerschichten transparent oder transluzent ist.

3. Kunststofformkörper nach Anspruch 1 oder 2, **dadurch gekennzeichnet, daß** die Partikel des Füllmaterials eine gebröchene Kornform aufweisen.

4. Kunststofformkörper nach einem der Ansprüche 1 bis 3, **dadurch gekennzeichnet, daß** die aushärtbare Reaktionsmasse einen ersten Monomer/Präpolymer-Sirup umfaßt.

5. Kunststofformkörper nach Anspruch 4, **dadurch gekennzeichnet, daß** der Präpolymer-Gehalt des ersten Sirups 5 bis 30 Gew.%, bezogen auf den Sirup beträgt.

6. Kunststofformkörper nach Anspruch 4 oder 5, **dadurch gekennzeichnet, daß** die Viskosität des ersten Sirups auf 20 bis 300 mPas eingestellt ist.

7. Kunststofformkörper nach einem der Ansprüche 4 bis 6, **dadurch gekennzeichnet, daß** das Präpolymer des ersten Sirups ein mittleres Molekulargewicht von 20.000 bis 300.000 Da aufweist.

8. Kunststofformkörper nach einem der Ansprüche 4 bis 7, **dadurch gekennzeichnet, daß** der erste Sirup ein radikalisch polymerisierbares Monomer, insbesondere vom Acrylattyp, und ein Präpolymer als Homo- öder Copolymer des Monomeren umfaßt.

9. Kunststofformkörper nach einem der Ansprüche 1 bis 8, **dadurch gekennzeichnet, daß** das partikelförmige Füllmaterial in der aushärtbaren Reaktionsmasse quellbar ist, und daß das gefüllte Harzmaterial einen Anteil an anorganischem Füllstoff im Bereich von 10 bis 70 Gew.% mit einer mittleren Korngröße von 5 bis 100 µm aufweist.

10. Kunststofformkörper nach einem der Ansprüche 1 bis 9, **dadurch gekennzeichnet, daß** das Harzmaterial des Füllmaterials aus einem zweiten Monomer/Präpolymer-Sirup hergestellt ist, welcher einen Anteil von 5 bis 30 Gew.% Präpolymer mit einem mittleren Molekulargewicht im Bereich von ca. 20.000 bis ca. 300.000 Da enthält.

11. Kunststofformkörper nach einem der Ansprüche 1 bis 10, **dadurch gekennzeichnet, daß** der Füllstoff Aluminiumoxidtrihydrat umfaßt, welches mit einem Silan in einer Menge von 0,04 bis 1 Gew.%, bezogen auf das Gewicht des Aluminiumoxidtrihydrats, beschichtet ist.

12. Kunststofformkörper nach Anspruch 10 oder 11, **dadurch gekennzeichnet, daß** der zweite Monomer/Präpolymer-Sirup einen Vernetzer mit einem Anteil von 0,5 bis 5 Gew.%, bezogen auf das Gesamtgewicht des Sirups, enthält.

13. Kunststofformkörper nach Anspruch 12, **dadurch gekennzeichnet, daß** der Vernetzer im zweiten Monomer/Präpolymer-Sirup aus bi- oder polyfunktionellen Acrylatvernetzern ausgewählt ist.

14. Kunststofformkörper nach einem der voranstehenden Ansprüche, **dadurch gekennzeichnet, daß** das partikelförmige Füllmaterial eine Mischung verschiedener granularer Füllmaterialien ist.

15. Kunststofformkörper nach einem der voranstehenden Ansprüche, **dadurch gekennzeichnet, daß** der Gesamt-Gehalt an anorganischem Füllstoff in dem Kunststofformkorper 30 bis 65 Gew.% beträgt.

16. Kunststofformkörper nach einem der voranstehenden Ansprüche, **dadurch gekennzeichnet, daß** mindestens ein Oberflächenbereich des Formkörpers spanabhebend bearbeitet ist.

17. Kunststofformkörper nach einem der voranstehenden Ansprüche, **dadurch gekennzeichnet, daß** mindestens ein Oberflächenbereich des Formkörpers abrasiv bearbeitet ist.

18. Verfahren zur Herstellung von Kunststofformkörpern gemäß einem der Ansprüche 1 bis 15, wobei eine Mischung einer aushärtbaren Reaktionsmasse zur Bildung einer Polymerphase mit einem partikelförmigen Füllmaterial hergestellt und zum Aushärten in eine Form gegeben wird, **dadurch gekennzeichnet, daß** die aushärtbare Reaktionsmasse bis zu 60 Gew.% an anorganischen Füllstoffen umfaßt, daß als Füllmaterial ein gegebenenfalls in der Reaktionsmasse quellbares Füllmateriäl, welches ein mit einem anorganischen Füllstoff gefülltes Harzmaterial umfaßt, verwendet wird, wobei das Füllmaterial eine Korngröße von 60 bis 8000 µm aufweist,
wobei ein Anteil des Füllmaterials von mindestens 10 Vol.% aus Partikeln gebildet ist, die zwei oder mehr verschiedenfarbige, oberflächlich sichtbare Polymerschichten aufweisen, und wobei das Füllmaterial so dosiert wird, daß es in dem Kunststofformkörper mit einem Anteil von 5 bis 75 Gew.% enthalten ist,
und daß die Mischung zum Aushärten in eine Form gegeben und thermisch ausgehärtet wird.

19. Verfahren nach Anspruch 18, **dadurch gekennzeichnet, daß** mindestens ein Oberflächenbereich des Formkörpers spanabhebend bearbeitet wird.

20. Verfahren nach Anspruch 18 oder 19, **dadurch gekennzeichnet, daß** mindestens ein Oberflächenbereich des Formkörpers abrasiv bearbeitet wird.

## Claims

1. A plastic moulded body, comprising a polymer phase made of a curable reaction compound and a particulate filling material embedded therein,
wherein the filling material comprises a resin material filled with an inorganic filler, wherein the polymer phase comprises up to 60 % by weight, in relation to the plastic moulded body, of inorganic adjuvant particles,
wherein the filling material has a grain size in the range from 60 to 8,000 µm and is contained in the plastic moulded body in a percentage from 5 to 75 % by weight,
**characterised in that** the filling material comprises up to at least 10 % by volume of particles, which has two or more differently coloured polymer layers that are visible on the surface.

2. A plastic moulded body according to Claim 1,
**characterised in that** at least one of the polymer layers is transparent or translucent.

3. A plastic moulded body according to Claim 1 or 2,
**characterised in that** the particles of the filling material have a broken particle structure.

4. A plastic moulded body according to one of Claims 1 to 3,
**characterised in that** the curable reaction compound comprises a first monomer/prepolymer syrup.

5. A plastic moulded body according to Claim 4,
**characterised in that** the prepolymer content of the first syrup is 5 to 30 % by weight, in relation to the syrup.

6. A plastic moulded body according to Claim 4 or 5,
**characterised in that** the viscosity of the first syrup is set at 20 to 300 mPas.

7. A plastic moulded body according to one of Claims 4 to 6,
**characterised in that** the prepolymer of the first syrup has an average molecular weight of 20,00 to 300,000 Da.

8. A plastic moulded body according to one of Claims 4 to 7,
**characterised in that** the first syrup comprises a radically polymerisable monomer, in particular of the acrylate type, and a prepolymer as a homopolymer or copolymer of the monomer.

9. A plastic moulded body according to one of Claims 1 to 8,
**characterised in that** the particulate filling material can swell in the curable reaction compound, **and in that** the filled resin material has a content of inorganic filler in the range from 10 to 70 % by weight with an average grain size of 5 to 100 µm.

10. A plastic moulded body according to one of Claims 1 to 9,
**characterised in that** the resin material of the filling material is produced from a second monomer/prepolymer syrup, which contains a content of 5 to 30 % by weight prepolymer having an average molecular weight in the range from approx. 20,000 to approx 300,000 Da.

11. A plastic moulded body according to one of Claims 1 to 10,
**characterised in that** the filler comprises aluminium oxide trihydrate, which is coated with a hydrosilicon in a quantity of 0.04 to 1 % by weight, in relation to the weight of the aluminium oxide trihydrate.

12. A plastic moulded body according to Claim 10 or 11,
**characterised in that** the second monomer/prepolymer syrup contains a cross-linkage agent having a content of 0.5 to 5 % by weight, in relation to the total weight of the syrup.

13. A plastic moulded body according to Claim 12,
**characterised in that** the cross-linkage agent in the second monomer/prepolymer syrup is selected from bi-or polyfunctional acrylate cross-linkage agents.

14. A plastic moulded body according to one of the pre characterising Claims,
**characterised in that** the particulate filling material is a mixture of various granular filling materials.

15. A plastic moulded body according to one of the pre characterising Claims,
**characterised in that** the total content of inorganic fillers in the plastic moulded body is 30 to 65 % by weight.

16. A plastic moulded body according to one of the preceding Claims,
**characterised in that** at least one surface region of the moulded body is machined down.

17. A plastic moulded body according to one of the preceding Claims,
**characterised in that** at least one surface region of the moulded body is abrasively treated.

18. A manufacturing process for plastic moulded bodies according to one of Claims 1 to 15, whereby a mixture of a curable reaction compound for forming a polymer phase with a particulate filling material is produced and for curing is transferred into a mould,
**characterised in that** the curable reaction compound comprises up to 60 % by weight inorganic fillers,
**in that** a filling material, which can possibly swell in the reaction compound, and which comprises a resin material filled with an inorganic filler, is used as filling material, whereby the filling material has a grain size of 60 to 8,000 µm, whereby a percentage of the filling material of at least 10 % by volume is formed from particles of two or more differently coloured polymer layers that are visible on the surface, and whereby the filling material is dosed so that it is contained in the plastic moulded body with a percentage of 5 to 75 % by weight,
**and in that** the mixture for curing is transferred into a mould and is thermally cured.

19. A process according to Claim 18,
**characterised in that** at least one surface region of the moulded body is machined down.

20. A process according to Claim 18 or 19,
**characterised in that** at least one surface region of the moulded body is abrasively treated.

## Revendications

1. Corps moulé en matière plastique comprenant une phase polymère formée à partir d'une masse réactionnelle durcissable et un matériau de charge particulaire incorporé à l'intérieur,
où le matériau de charge comprend un matériau résinique chargé avec une charge inorganique, où la phase polymère comprend jusqu'à 60 % en masse, par rapport au corps moulé en matière plastique, de particules d'additifs inorganiques, où le matériau de charge présente une taille de grains dans le domaine de 60 à 8 000 µm et est contenu dans le corps moulé en matière plastique en une proportion de 5 à 75 % en masse, **caractérisé en ce que** le matériau de charge comprend à raison d'au moins 10 % en volume des particules qui présentent deux ou plusieurs couches polymères de couleurs différentes, visibles superficiellement.

2. Corps moulé en matière plastique selon la revendication 1 **caractérisé en ce qu'**au moins l'une des couches polymères est transparente ou translucide.

3. Corps moulé en matière plastique selon la revendication 1 ou 2 **caractérisé en ce que** les particules du matériau de charge présentent une forme de grains brisée.

4. Corps moulé en matière plastique selon l'une des revendications 1 à 3 **caractérisé en ce que** la masse réactionnelle durcissable comprend un premier sirop de monomère/prépolymère.

5. Corps moulé en matière plastique selon la revendication 4 **caractérisé en ce que** la teneur en prépolymère du premier sirop est de 5 à 30 % en masse par rapport au sirop.

6. Corps moulé en matière plastique selon la revendication 4 ou 5 **caractérisé en ce que** la viscosité du premier sirop est ajustée à 20 à 300 mPas.

7. Corps moulé en matière plastique selon l'une des revendications 4 à 6 **caractérisé en ce que** le prépolymère du premier sirop présente une masse moléculaire moyenne de 20 000 à 300 000 Da.

8. Corps moulé en matière plastique selon l'une des revendications 4 à 7 **caractérisé en ce que** le premier sirop comprend un monomère polymérisable par polymérisation radicalaire, en particulier du type acrylate, et un prépolymère sous forme d'homo - ou copolymère du monomère.

9. Corps moulé en matière plastique selon l'une des revendications 1 à 8 **caractérisé en ce que** le matériau de charge particulaire est gonflable dans la masse réactionnelle durcissable, et **en ce que** le matériau résinique chargé présente une proportion de charge inorganique dans le domaine de 10 à 70 % en masse avec une taille de grain moyenne de 5 à 100 µm.

10. Corps moulé en matière plastique selon l'une des revendications 1 à 9 **caractérisé en ce que** le matériau résinique du matériau de charge est produit à partir d'un deuxième sirop de monomère/prépolymère qui contient une proportion de 5 à 30 % en masse de prépolymère avec une masse moléculaire moyenne dans le domaine d'environ 20 000 environ à 300 000 Da.

11. Corps moulé en matière plastique selon l'une des revendications 1 à 10 **caractérisé en ce que** la charge comprend de l'oxyde d'aluminium trihydraté qui est recouvert d'un silane en une quantité de 0,04 à 1 % en masse par rapport à la masse de l'oxyde d'aluminium trihydraté.

12. Corps moulé en matière plastique selon la revendication 10
ou 11 **caractérisé en ce que** le deuxième sirop de monomère/prépolymère contient un réticulant en une proportion de 0,5 à 5 % en masse par rapport à la masse totale du sirop.

13. Corps moulé en matière plastique selon la revendication 12 **caractérisé en ce que** le réticulant dans le deuxième sirop de monomère/prépolymère est choisi parmi les réticulants acrylates di- ou polyfonctionnels.

14. Corps moulé en matière plastique selon l'une des revendications précédentes **caractérisé en ce que** le matériau de charge particulaire est un mélange de différents matériaux de charge granulaires.

15. Corps moulé en matière plastique selon l'une des revendications précédentes **caractérisé en ce que** la teneur totale en charge inorganique dans le corps moulé en matière plastique est 30 à 65 % en masse.

16. Corps moulé en matière plastique selon l'une des revendications précédentes **caractérisé en ce qu'**au moins un domaine de surface du corps moulé est traité par enlèvement de copeaux.

17. Corps moulé en matière plastique selon l'une des revendications précédentes **caractérisé en ce qu'**au moins un domaine de surface du corps moulé est traité par abrasion.

18. Procédé de fabrication de corps moulés en matière plastique selon l'une des revendications 1 à 15 où un mélange d'une masse réactionnelle durcissable pour la formation d'une phase polymère avec un matériau de charge particulaire est produit et introduit dans un moule pour le durcissement, **caractérisé en ce que** la masse réactionnelle durcissable comprend jusqu'à 60 % en masse de charges inorganiques, **en ce que** l'on utilise comme matériau de charge un matériau de charge éventuellement gonflable dans la masse réactionnelle, qui comprend un matériau résinique chargé avec une charge inorganique, où le matériau de charge présente une taille de grains de 60 à 8 000 µm, où une proportion du matériau de charge d'au moins 10 % en volume est formée par des particules qui comportent 2 ou plusieurs couches polymères de couleurs différentes, visibles superficiellement, et où le matériau de charge est dosé de telle manière qu'il est contenu dans le corps moulé en matière plastique en une proportion de 5 à 75 % en masse, et **en ce que** le mélange est introduit dans un moule pour le durcissement et est durci thermiquement.

19. Procédé selon la revendication 18 **caractérisé en ce qu'**au moins un domaine de surface du corps moulé est traité par enlèvement de copeaux.

20. Procédé selon la revendication 18 ou 19 **caractérisé en ce qu'**au moins un domaine de surface du corps moulé est traité par abrasion.
